# EUROPEAN PATENT SPECIFICATION

(11) **EP 2 732 703 B1**
(45) Date of publication and mention of the grant of the patent: **11.01.2017**
(21) Application number: 13192393.0
(22) Date of filing: 11.11.2013
(51) Int. Cl.: A01M 1/20

(54) **Bait trap for insects**
Lockstofffalle für Insekten
Piège d'appât pour insectes

(30) Priority: 14.11.2012 ES 201231205 U
(43) Date of publication of application: 21.05.2014
(73) Proprietor: Zyxtudio diseño e innovación SL, 46003 Valencia (ES)
(72) Inventor: Blasco Feo, Vicente, 46003 Valencia (ES)
(74) Representative: Soler Lerma, Santiago

(56) References cited:
- WO-A1-2006/106315
- AU-B2- 582 904
- US-A- 4 214 400
- US-A1- 2012 066 960

## Description

The present invention, as its name indicates, refers to a trap for insects, especially large insects such as, for example, cockroaches.

The trap is of the type comprising a housing and a bait inside, said housing having communication holes between the interior and exterior apt for the insect to be able to enter to eat and exit afterwards, or even so that different insects can coexist eating the bait without bothering each other, and in which the bait is located inside a basin preventing involuntary access thereto.

### PRIOR ART

One of the most popular and effective methods for combating crawling insects is the use of a bait that generally is located close to places where there are usually insects so that, according to their normal habits of obtaining food, they feed themselves with the poisonous bait and will carry a portion of it away when returning to their nests, where the bait will be shared with other insects, preferably with the queen, having the result of killing a large number of them.

Different devices are known in the art, usually called insect traps or bait stations.

The ones that are most extensively used have a base with several topographic features used for guiding the insects towards the bait, and a cover that covers said base to create an enclosed bait station.

Typical examples of this style of traps are disclosed in patents US4563836, of Woodruff or US4837969, of Demarest.

The base of each one of the traps disclosed in the earlier patents comprises a unitary piece of a plastic material having a relatively thin and deformable film or laminate shape that uses walls or passages integrally shaped as part of the base for guiding the insects to the bait while a cover closes the top portion of the assembly without obstructing the transit channels of the insects.

In both patents the bait is found in a central internal position and located in a basin that helps maintain it in its place in the case the tramp is submitted to unforeseen situations, while also protecting against involuntary access to it, for example by a child.

In Patent US 4563836 of Woodruff, as well as in patent US 4214400, the cover is only supported on the walls, resulting in limitations when bearing loads on the top portion, there being a high risk of being crushed.

In the Demarest patent, the base includes several support features that protrude on top, and the cover also provides the outer side walls of the trap, the cover being, therefore, a housing that adjusts downwards over the support structures underlying the base and interacts with them.

The passage doors through which the insects enter the Demarast traps are not shaped like breaches in or between the walls that rise up from the base, but rather, they are holes or openings made in the portion of the cover that constitutes the housing, in such a way that it provides solidity to the assembly, making it capable of bearing certain loads on its top portion without being crushed, although in order to maintain the solidity, the entry and exist places of the insects are limited exclusively to said holes, which have a limited size so as not to affect the resistance of the assembly.

For the bait trap to work properly during use, the bait must be in the central position.

Patent US4793093, of Gentile, discloses a solution for maintaining the bait in the central basin.

This patent describes a trap built of thin plastic material having a base with a central well for housing the basin, and a cover that includes a member having a bowl shape oriented downwards, which sticks out towards the inside against the top surface of the bait so that it remains in the central well.

However, the member having a bowl shape pointing downwards does not provide resistance against being crushed, because it is supported directly against the bait in the well.

In its place, the resistance against being crushed is provided by the lateral walls that rest over the top surface of a peripheral wall formed by the base.

In Patent US 2012/0066960, the connection between the cover and the bottom is fixed only by the central pillar but no other points of strong union are mentioned.

### DESCRIPTION OF THE INVENTION

The purpose of the present invention is to obtain a safe and effective trap.

To be safe it must ensure that the bait remains outside the reach of anyone except the insects that enter the trap.

Therefore, the trap must be designed with:
a) a shape that prevents introducing fingers, such as by children
b) sufficient stiffness for avoiding a rupture of the device resulting in the bait being spilled, and
c) a bait holder inside the device to prevent it from exiting therefrom, even if the trap is used in a non-parallel position to the surface of the ground.

All the foregoing without seriously affecting having the most space possible for entering and exiting so that it is easy for the insects to find the bait and enter and exit the device, while at the same time favouring the dispersion of the attracting scents.

Therefore, the proposed trap comprises:
A base with a central cant having the shape of a crater inside of which a central pillar rises up and protrudes, and a series of internal ribs.

A cover having on its perimeter, areas joined to the base and canted areas separated from the base.

Heat sealed points between one and the other.

The trap so configured has large lateral openings that facilitate the entry and exit of insects, as well as the dispersion of the attracting substances.

Furthermore, given that it has a central pillar, the trap is resistant to being crushed and also, said pillar and the ribs inside the crater act as bait retainers to prevent its movement.

### BRIEF EXPLANATION OF THE DRAWINGS

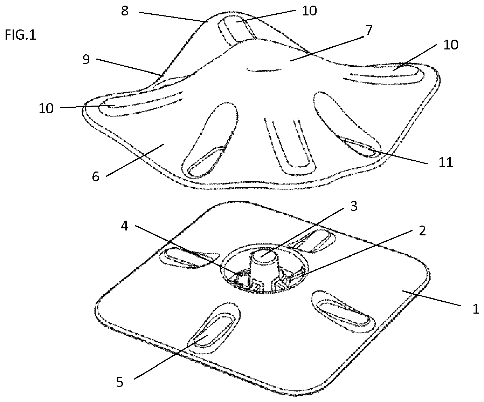

**FIGURE 1** displays an exploded view of the trap that does not include the bait so as to be able to see the details. Thus we find base (1) with its central crater (2) that houses a pillar (3) and some internal ribs (4), there also being in the base some contact points (5) specially prepared to be joined to the cover, preferably by a heat seal.
Figure 1 also displays cover (6) with central dome (7) and some peripheral skirts that have elevated areas (8) and depressed areas (9), there being in the elevated areas some radial ribs (10) and in the depressed areas some ridges(11) having the purpose of supporting and being fixed on contact points (5).

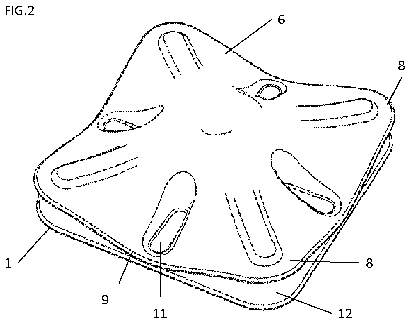

**FIGURE 2** displays the mounted devices for viewing base (1) and cover (6) joined by ridges(11) of depressed areas (9) while elevated areas (8)of the cover are left a certain distance from the base creating some gaps (12) that enable access to the interior.

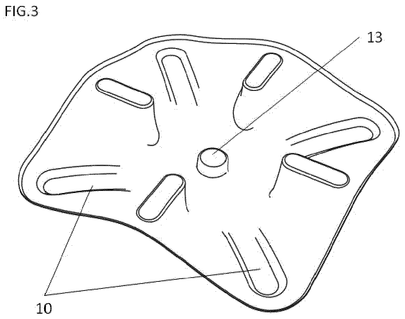

**FIGURE 3** displays the interior portion of cover (6), in which radial ribs (10) are visible, as well as housing (13), to which is fixed the top portion of pillar (3) after the device is assembled.

### DESCRIPTION OF AN EMBODIMENT OF THE INVENTION

The following is a proposed embodiment of the invention which is not exclusive, but rather for purposes of explaining the technical solutions attained, for which any other embodiment that adopts them will likewise be covered by the present invention.

The trap comprises a base and cover in which:
Base (1) comprises a sheet of plastic material having a square shape with softened edges, its central portion being higher than the rest, forming crater (2) within which stands pillar (3) that exceeds the height of the mouth of the crater, there being a series of ribs (4) inside the crater. There are also recessed areas (5) having a surface with a smooth base.

Cover (6) has a mushroom shape with a central dome (7) and an essentially square and undulated perimeter so that elevated areas (8) alternate with depressed areas (9), the elevated areas coinciding with the corners of the square and the depressed areas with the sides thereof.

Cover (6) and base (1) are joined both by heat seals as ridges (11) of the cover and contact points (5) coincide, as well as by clipping together by inserting the top end of pillar (3) into a housing (13) present in the interior portion of the dome of the cover.

Due to the undulated shape of the cover, a series of gaps (12) are created which enable and direct the entry towards the inside of the trap, specifically towards crater (2), inside of which the bait is placed.

Large gaps(12) enable strong aerating inside the trap, which foments the dispersion of the attracting substances.

## Claims

1. **TRAP FOR INSECTS** of the type comprising a bait inside a structure the insect can reach through some openings comprising that structure a base that comprises a cant having the shape of a crater, a cover having elevated areas and depressed areas, at least one pillar that joins the base and the cover and bait retaining elements inside the crater **characterised in that**:
1. The cover (6) has a mushroom shape with a central dome and has, on its perimeter, depressed areas joined to the base and canted elevated areas separated from the base.
2. In the depressed areas (9) on the cover there are some ridges having a flat base coinciding, after the base and cover are superimposed, with some contact points (5) on the base, making contact with each other.

2. **TRAP FOR INSECTS** in accordance with claim 1, **characterised in that** the cover has radial ribs (10).

3. **TRAP FOR INSECTS** in accordance with claim 1, **characterised in that** radial ribs (10) are located on elevated areas (8) of the cover.

4. **TRAP FOR INSECTS** in accordance with claim 1, **characterised in that** the pillar that joins the base and the cover is located in the crater.

5. **TRAP FOR INSECTS** in accordance with the previous claim, **characterised in that** the pillar forms part of the body of the base.

6. **- TRAP FOR INSECTS** in accordance with claim 1, **characterised in that** the bait retaining elements inside the crater comprises a series of internal ribs (4) in the crater.

## Patentansprüche

1. Falle für Insekten des Typs, der einen Köder innerhalb einer Struktur umfasst, den das Insekt durch einige Öffnungen erreichen kann, wobei diese Struktur eine Basis, die eine Schräge in der Form eines Trichters umfasst, eine Abdeckung mit erhöhten Bereichen und abgesenkten Bereichen, mindestens eine Säule umfasst, die die Basis und die Abdeckung und die Köder haltenden Elemente innerhalb des Trichters verbindet, **dadurch gekennzeichnet, dass**:
1. die Abdeckung (6) eine Pilzform mit einer mittigen Kuppel aufweist und an ihrem Umfang abgesenkte Bereiche, die mit der Basis verbunden sind, und schräge erhöhte Bereiche aufweist, die von der Basis getrennt sind,
2. in den abgesenkten Bereichen (9) an der Abdeckung einige Kämme mit einer flachen Basis vorhanden sind, die, nachdem die Basis und die Abdeckung übereinander gelegt worden sind, mit einigen Kontaktpunkten (5) an der Basis zusammentreffen, wodurch sie Kontakt miteinander herstellen.

2. Falle für Insekten nach Anspruch 1, **dadurch gekennzeichnet, dass** die Abdeckung radiale Rippen (10) aufweist.

3. Falle für Insekten nach Anspruch 1, **dadurch gekennzeichnet, dass** radiale Rippen (10) auf erhöhten Bereichen (8) der Abdeckung angeordnet sind

4. Falle für Insekten nach Anspruch 1, **dadurch gekennzeichnet, dass** sich die Säule, die die Basis und die Abdeckung verbindet, in dem Trichter befindet.

5. Falle für Insekten nach den vorhergehenden Ansprüchen, **dadurch gekennzeichnet, dass** die Säule einen Teil des Körpers der Basis bildet.

6. Falle für Insekten nach Anspruch 1, **dadurch gekennzeichnet, dass** die Köder haltenden Elemente im Inneren des Trichters eine Reihe von inneren Rippen (4) in dem Trichter umfassen.

## Revendications

1. **PIÈGE POUR INSECTES** du type comprenant un appât à l'intérieur d'une structure que l'insecte peut atteindre à travers certaines ouvertures, comprenant dans la structure une base qui comprend un dévers ayant la forme d'un cratère, un couvercle ayant des zones surélevées et des zones évidées, au moins un pilier qui relie la base et le couverture et des éléments de retenue d'appât à l'intérieur du cratère, **caractérisé en ce que** :
1. le couvercle (6) a une forme de champignon avec un dôme central et possède, sur son périmètre, des zones évidées reliées à la base et des zones surélevées biseautées séparées de la base.
2. Dans les zones évidées (9) sur le couvercle se trouvent certaines crêtes ayant une base plate coïncidant, une fois que la base et le couvercle sont superposés, avec certains points de contact (5) sur la base, en contact les uns avec les autres.

2. **PIÈGE POUR INSECTES** selon la revendication 1, **caractérisé en ce que** le couvercle possède des nervures radiales (10).

3. **PIÈGE POUR INSECTES** selon la revendication 1, **caractérisé en ce que** les nervures radiales (10) sont situées sur les zones surélevées (8) du couvercle.

4. **PIÈGE POUR INSECTES** selon la revendication 1, **caractérisé en ce que** le pilier qui relie la base et le couvercle est situé dans le cratère.

5. **PIÈGE POUR INSECTES** selon la revendication précédente, **caractérisé en ce que** le pilier forme une partie du corps de la base.

6. **- PIÈGE POUR INSECTES** selon la revendication 1, **caractérisé en ce que** les éléments de retenue d'appât à l'intérieur du cratère comprennent une série de nervures internes (4) dans le cratère.
